Europäisches Patentamt

European Patent Office

Office européen des brevets

(11) Numéro de publication: **0 390 970**
**A1**

## (12) DEMANDE DE BREVET EUROPEEN

(21) Numéro de dépôt: 89122869.4

(22) Date de dépôt: **12.12.89**

(51) Int. Cl.⁵: **A63B 53/00, G01B 5/00**

(30) Priorité: **07.04.89 FR 8904615**

(43) Date de publication de la demande:
**10.10.90 Bulletin 90/41**

(84) Etats contractants désignés:
**BE DE ES GB SE**

(71) Demandeur: **SALOMON S.A.**
**Metz-Tessy**
**F-74370 Pringy(FR)**

(72) Inventeur: **Dumontier, Frank**
**13, Rue de la Poste**
**F-74000 Annecy(FR)**
Inventeur: **Desbiolles, Jack**
**20, Rue des Jardins**
**F-74000 Annecy(FR)**

(74) Mandataire: **Gasquet, Denis**
**Salomon S.A. Route des Creuses**
**F-74650 Chavanod(FR)**

(54) **Dispositif de mise en position précise, dans l'espace, d'une tête d'un club de golf, et tête de club adapté à cet effet.**

(57) La présente invention concerne un dispositif de mise en position précise, dans l'espace, d'une tête de club de golf (1).

Ce dispositif est caractérisé en ce qu'il comprend un socle de mise en position (2) présentant trois points d'appui (A′,B′,C′), en creux ou en relief, définissant un triangle d'appui situé dans un plan de référence (P), et, sur la tête (1) elle-même du club de golf, trois points d'appui (A,B,C,), en relief ou en creux, constituant les trois sommets d'un triangle de sustentation identique au triangle d'appui du socle (2) et pouvant venir se placer à l'endroit exact des trois sommets (A,B,C,) du triangle d'appui du socle (2) en immobilisant alors la tête (1) du club dans une seule position possible dans l'espace.

EP 0 390 970 A1

Fig.1

La présente invention concerne un dispositif de mise en position précise, dans l'espace, d'une tête d'un club de golf, ainsi qu'une tête de club adaptée à cet effet, en vue de contrôler ses côtes et notamment les angles de ses faces au cours de et après sa fabrication et avant son montage sur un manche de club.

Les têtes de club de golf sont par exemple constituées par des pièces creuses métalliques, fabriquées par moulage, sur lesquelles peuvent être rapportés des éléments soudés. Ensuite les têtes moulées sont finies par un ponçage manuel, ce qui peut conduire, à la suite d'un excès d'abrasion, à des écarts inadmissibles par rapport aux côtes théoriques désirées pour la tête de club. Par ailleurs comme les têtes de club ont des formes complexes, délimitées par un ensemble de surfaces courbes se raccordant les unes aux autres, il n'existe aucune surface plane pouvant servir de plan de référence en vue de la mesure des angles des divers éléments de la tête de club.

La présente invention vise à remédier à cet inconvénient procurant un dispositif de conception simple permettant de mettre en position d'une manière précise dans l'espace toutes les têtes de club d'une même série de fabrication, par rapport à un même repère ou plan de référence.

A cet effet ce dispositif de mise en position précise, dans l'espace, d'une tête de club de golf est caractérisé en ce qu'il comprend un socle de mise en position présentant trois points d'appui, en creux ou en relief, définissant un triangle d'appui situé dans un plan de référence, et, sur la tête elle-même du club de golf, trois points d'appui, en relief ou en creux, constituant les trois sommets d'un triangle de sustentation identique au triangle d'appui du socle et pouvant venir se placer à l'endroit exact des trois sommets du triangle d'appui du socle en immobilisant alors la tête du club dans une seule position possible dans l'espace.

On décrira ci-après, à titre d'exemple non limitatif, une forme d'exécution de la présente invention, en référence au dessin annexé sur lequel :

La figure 1 est une vue en plan du dispositif de mise en position d'une tête de club de golf suivant l'invention.

La figure 2 est une vue en coupe verticale faite suivant la ligne II-II de la figure 1.

La figure 3 est une vue en coupe verticale faite suivant la ligne III-III de la figure 1.

La figure 4 est une vue de dessous de la tête du club.

La figure 5 est une vue de dessous d'une variante d'exécution d'une tête de club.

La figure 6 est une vue en coupe partielle faite suivant la ligne VI-VI de la figure 5.

La figure 7 est une vue en perspective d'une autre variante d'exécution d'une tête de club.

Le dispositif suivant l'invention est destiné à mettre en position, dans une seule position précise dans l'espace, une tête de club de golf 1. Cette tête de club 1 est constituée par une pièce creuse, fabriquée par moulage et dont la surface externe de forme complexe, est constituée par un ensemble de faces courbes. Pour pouvoir placer chacune des têtes de golf 1 dans la même position dans l'espace, à des fins de contrôle, d'usinage ou de correction de ses angles et des formes de ses surfaces, il est prévu, suivant l'invention, sur la tête de club 1 et plus particulièrement, dans l'exemple non limitatif représenté sur le dessin, dans sa face inférieure 1a, trois points d'appui A,B,C définissant un triangle de sustentation contenu dans un plan de référence P. Ces points d'appui peuvent être constitués par des zones en creux respectives venant de moulage avec la face inférieure 1a de la tête de club 1.

Le dispositif suivant l'invention comprend par ailleurs un socle de mise en position 2 qui est constitué par une plaque rectangulaire ou de toute autre forme. Ce socle 2, qui est représenté horizontal sur le dessin, porte, sur sa surface supérieure, trois colonnes 3a,3b,3c se terminant par des parties extrêmes supérieures 4a,4b,4c, pointues ou sphériques. Les extrémités ou sommets respectifs $A',B',C'$ des trois pointes 4a,4b,4c définissent un triangle d'appui $A'B'C'$ identiques au triangle de sustentation A B C et qui peut être isocèle, comme il est représenté sur le dessin, ou encore de forme quelconque.

Lorsque l'on désire effectuer un contrôle des angles et/ou des formes des faces d'une tête de club 1, on applique cette tête sur le socle 2 de manière que les trois pointes supérieures 4a,4b,4c des trois colonnes 3a,3b,3c s'engagent respectivement dans les trois zones en creux prévues dans la face inférieure 1a de la tête de club 1 et définissant les trois sommets A,B,C du triangle de sustentation. Dans cette position d'appui les extrémités respectives $A',B',C'$ des trois pointes 4a,4b,4c se trouvent être confondues avec les trois points d'appui A,B,C constitués par les fonds des zones en creux ponctuelles formées dans la face inférieure 1a de la tête de club 1. De ce fait cette tête de club 1 se trouve placée dans une seule position possible dans l'espace et il est alors aisé d'effectuer sur elle toutes les opérations de contrôle et/ou d'usinage désirées.

Le plan de référence P dans lequel se trouvent conjointement les sommets A,B,C et $A',B',C'$, lorsque la tête de club 1 est en appui sur le socle 2, peut être un plan horizontal parallèle au plan du socle 2 comme il est représenté sur le dessin et dans ce cas les sommets $A',B',C'$ des colonnes respectives 3a,3b,3c sont situés à la même hauteur par rapport au socle 2. Toutefois cette disposition n'est pas limitative et le plan P pourrait avoir une orientation quelconque dans l'espace, le plan P recoupant alors le plan du socle 2.

Dans la forme d'exécution précédente on a indiqué que les points d'appui A,B,C prévus dans la face plane 1a de la tête de club 1 étaient constitués par des zones en creux dans lesquelles s'engagent les pointes respectives 4a,4b,4c solidaires du socle 2. Cette disposition n'est toutefois pas limitative et la disposition inverse pourrait être également envisagée, c'est-à-dire que la face inférieure 1a de la tête de club 1 pourrait porter trois pointes d'appui A,B,C en saillie vers le bas et venant s'engager dans trois creux A′,B′,C′ formés aux sommets des trois colonnes respectives 3a,3b,3c.

Par ailleurs les trois points d'appui A,B,C ne sont pas nécessairement prévus dans la même face de la tête de club et ils pourraient être répartis dans deux ou trois faces différentes de la tête de club 1 ou même sur le cou de la tête. Par exemple les deux points d'appui A et C pourraient être prévus dans la face inférieure 1a de la tête de club 1 alors que le troisième point d'appui B serait prévu dans le cou 1b de la tête de club ou dans l'une des faces se raccordant à la face inférieure 1a.

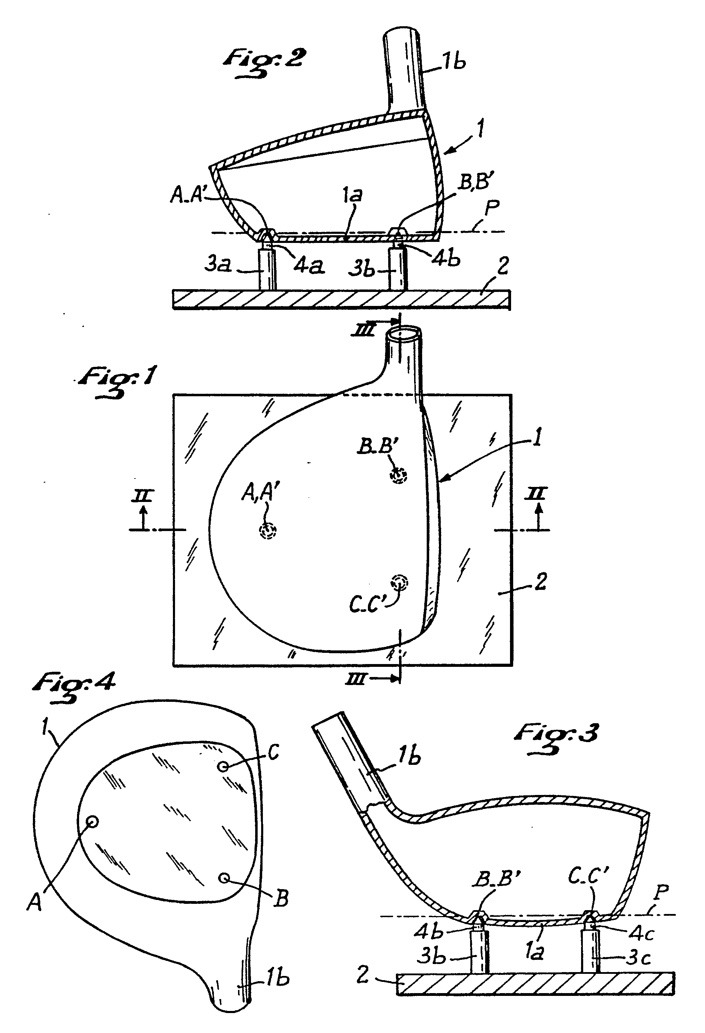

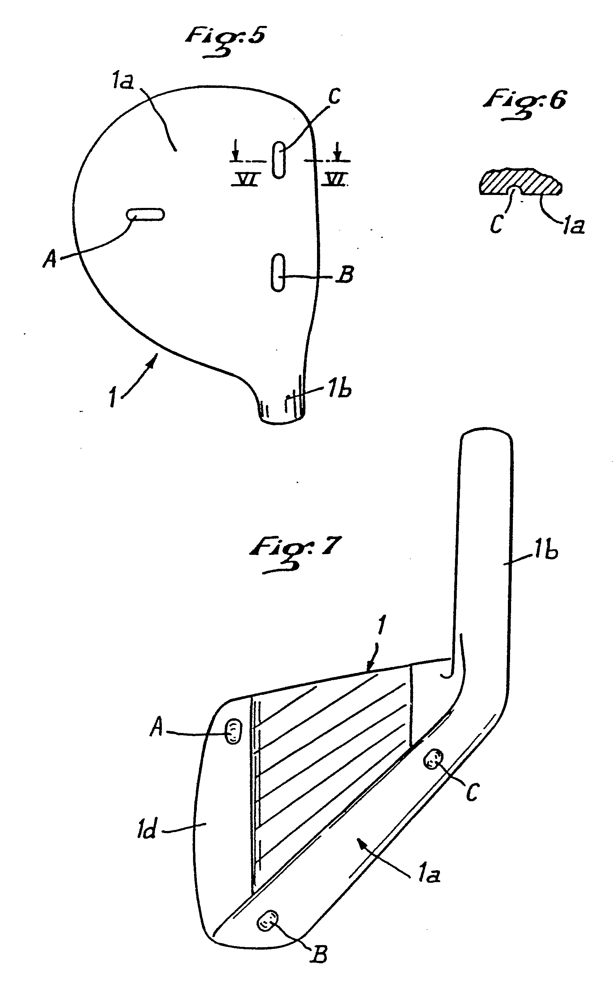

Dans la variante d'exécution représentée sur les figures 5 et 6 les trois points d'appuis A,B,C sont réalisés par des creux allongés, présentant une section transversale courbe comme le fait apparaître la figure 6. Les creux allongés constituant les deux points d'appuis B,C sont alignés suivant une même direction tandis que le troisième point d'appui A est allongé dans une direction perpendiculaire à la direction d'alignement des deux premiers points d'appui B,C.

Les figures 1 à 6 représentent une tête de club de golf communément appelée "bois" mais l'invention n'est bien entendu pas limitée à ce seul type de club. En effet l'invention peut être utilisée sur un club du type appelé "fer" comme il est représenté sur la figure 7. Dans ce cas les trois points d'appui A,B,C, qui sont constitués par des creux comme dans le cas des réalisations précédentes, sont répartis sur deux faces différentes, les points d'appui B,C étant situés sur la face inférieure 1a du fer tandis que le troisième point d'appui A est situé sur la face de frappe 1d.

**Revendications**

1.- Dispositif de mise en position précise, dans l'espace, d'une tête de club de golf (1), caractérisé en ce qu'il comprend un socle de mise en position (2) présentant trois points d'appui (A′,B′,C′), en creux ou en relief, définissant un triangle d'appui situé dans un plan de référence (P), et, sur la tête (1) elle-même du club de golf, trois points d'appui (A,B,C,), en relief ou en creux, constituant les trois sommets d'un triangle de sustentation identique au triangle d'appui du socle (2) et pouvant venir se placer à l'endroit exact des trois sommets (A,B,C,) du triangle d'appui du socle (2) en immobilisant alors la tête (1) du club dans une seule position possible dans l'espace.

2.- Dispositif suivant la revendication 1 caractérisé en ce que le socle de mise en position (2) est constitué par une plaque qui porte, sur sa surface supérieure, trois colonnes (3a,3b,3c) se terminant par des parties pointues extrêmes supérieures (4a,4b,4c) dont les extrémités ou sommets respectifs (A′,B′,C′) définissent le triangle d'appui (A′B′C′).

3.- Dispositif suivant l'une quelconque des revendications précédentes caractérisé en ce que les trois points d'appui (A, B, C,) sont formés en creux ou en relief dans la face inférieure (1a) de la tête de club (1).

4.- Dispositif suivant l'une quelconque des revendications 1 et 2 caractérisé en ce que les trois points d'appui (A,B,C,) sont répartis dans deux ou trois faces différentes de la tête de club (1).

5. - Dispositif suivant l'une quelconque revendications 1 et 2 caractérisé en ce qu'au moins un point d'appui est prévu sur le cou (1b) de la tête de club.

6.- Dispositif suivant l'une quelconque des revendications 1 et 2 caractérisé en ce qu'au moins un point d'appui (A) est prévu sur la face de frappe (1d) de la tête de club (1).

7. - Tête de club de golf caractérisée en ce qu'elle comprend sur sa surface trois points d'appui (A,B,C) matérialisés sous la forme de zones ponctuelles en creux ou en relief.

8. - Tête de club de golf suivant la revendication 7 caractérisée en ce que les trois points d'appui (A,B,C) sont formés sur sa face inférieure (1a).

9. - Tête de club de golf suivant la revendication 7 caractérisée en ce que les trois points d'appui sont répartis sur plusieurs de ses faces.

10.- Tête de club de golf suivant la revendication 9 caractérisée en ce que deux points d'appuis (B,C) sont prévus sur sa face inférieure (1a) et un point d'appui (A) est prévu sur sa face de frappe (1d).

11.- Tête de club de golf suivant l'une quelconque des revendications 7 à 10 caractérisée en ce qu'au moins un point d'appui est prévu sur son cou (1b).

EP 0 390 970 A1

Fig: 2

Fig: 1

Fig: 4

Fig: 3

Fig.5

Fig.6

Fig.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 766 698 (SOLOMKO) <br> * Figures 6-9; colonne 3, ligne 55 - colonne 4, ligne 2 * | 1-3,7-8 | A 63 B 53/00 <br> G 01 B 5/00 |
| Y | | 4-6,9-11 | |
| | --- | | |
| A | US-A-1 675 437 (WALDRON) <br> * Figures 7-9; page 3, lignes 93-110 * | 1-3,7-8 | |
| | --- | | |
| Y | GB-A-2 197 493 (DELFIELD PRECIS. ENG. LTD) <br> * Figures 1-3; page 2, lignes 11-22,107-115 * | 4-6,9-11 | |
| | --- | | |
| A | US-A-4 763 420 (McCABE et al.) <br> * Figures 1-2,4A,4B,5D; abrégé * | 1 | |
| | ----- | | |

DOMAINES TECHNIQUES
RECHERCHES (Int. Cl.5)

A 63 B
G 01 B
B 23 Q
B 27 M

Le présent rapport a été établi pour toutes les revendications

| Lieu de la recherche | Date d'achèvement de la recherche | Examinateur |
|---|---|---|
| LA HAYE | 09-07-1990 | JONES T.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)